(19) Europäisches Patentamt
European Patent Office
Office européen des brevets

(11) EP 3 053 939 B1

(12) **EUROPEAN PATENT SPECIFICATION**

(45) Date of publication and mention of the grant of the patent:
**10.04.2019 Bulletin 2019/15**

(21) Application number: **14851185.0**

(22) Date of filing: **18.09.2014**

(51) Int Cl.:
***C08F 290/04*** *(2006.01)* ***C08C 19/22*** *(2006.01)*
***C08C 19/28*** *(2006.01)* ***C08F 2/48*** *(2006.01)*
***C08G 18/69*** *(2006.01)* ***C08G 18/62*** *(2006.01)*
***C08G 18/67*** *(2006.01)* ***C08G 18/75*** *(2006.01)*
***C08G 18/22*** *(2006.01)* ***G02B 1/04*** *(2006.01)*

(86) International application number:
**PCT/JP2014/004807**

(87) International publication number:
**WO 2015/049842 (09.04.2015 Gazette 2015/14)**

(54) **ACRYLIC-MODIFIED, PB-CURABLE COMPOSITION HAVING EXCELLENT LIGHT RESISTANCE AND EXCEPTIONAL MECHANICAL STRENGTH**

ACRYLMODIFIZIERTE, PB-HÄRTBARE ZUSAMMENSETZUNG MIT AUSGEZEICHNETER LICHTBESTÄNDIGKEIT UND AUSGEZEICHNETER MECHANISCHER FESTIGKEIT

COMPOSITION DURCISSABLE AU PB MODIÉE PAR L'ACRYLIQUE PRÉSENTANT UNE EXCELLENTE RÉSISTANCE À LA LUMIÈRE ET UNE EXCELLENTE RÉSISTANCE MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2013 JP 2013208826**
**04.10.2013 JP 2013208832**
**04.10.2013 JP 2013208833**

(43) Date of publication of application:
**10.08.2016 Bulletin 2016/32**

(73) Proprietor: **Nippon Soda Co., Ltd.**
**Tokyo 100-8165 (JP)**

(72) Inventor: **HASHIMOTO, Hiroki**
**Ichihara-shi**
**Chiba 290-0045 (JP)**

(74) Representative: **Wibbelmann, Jobst**
**Wuesthoff & Wuesthoff**
**Patentanwälte PartG mbB**
**Schweigerstrasse 2**
**81541 München (DE)**

(56) References cited:
**EP-A1- 0 153 520** **EP-A1- 2 020 656**
**WO-A1-91/03498** **WO-A1-2013/115250**
**JP-A- S5 975 916** **JP-A- S60 112 648**
**JP-A- 2003 073 429** **JP-A- 2003 119 231**
**JP-A- 2004 299 263** **JP-A- 2006 016 500**
**JP-A- 2007 084 598** **JP-A- 2010 126 542**
**JP-A- 2011 116 965** **JP-A- 2014 052 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 053 939 B1

## Description

### Technical Field

The present invention relates to a photocurable composition containing a terminal-modified and optionally hydrogenated polybutadiene, a (meth) acrylic acid ester monomer, and a photo-radical polymerization initiator, and a cured product obtained by photocuring the photocurable composition.

### Background Art

Photocurable compositions containing a polybutadiene or a hydrogenated polybutadiene with its terminal portion modified by an acryloyl group or a methacryloyl group, a (meth) acrylic acid ester monomer, and a photo-radical polymerization initiator are known. These compositions can be photocured to give cured products that can be applied to a variety of applications.

Patent document 1 discloses a photocurable composition containing (C) 0.1 to 10 parts by mass of a photo-radical polymerization initiator, with respect to a total of 100 parts by mass of (A) 20 to 90% by mass of a reactive polymer having a terminal (meth)acryloyl group and (B) 80 to 10% by mass of a (meth) acrylic acid ester monomer, and a cured product thereof.

Patent document 2 discloses a composition containing an acrylate group terminated oligomer, an acrylate or methacrylate group terminated reactive diluent having 3 to 20 carbon atoms, and a photo initiator selected from the group consisting of 2-hydroxycyclohexylphenone, diethoxyacetophenone, 1-(4-dodecylphenyl)-2-hydroxy-2-methylpropan-1-one, 2-hydroxy-2-methyl-1-phenyl-propan-1-one, and mixtures thereof.

### Prior Art Documents

### Patent Documents

Patent document 1: Japanese Unexamined Patent Application Publication No. 2007-39587
Patent document 2: Japanese Unexamined Patent Application Publication No. S60-195538

### Summary of the Invention

Object to be Solved by the Invention

A photocurable composition from which a cured product does not cause yellowing when photocured and has good mechanical properties can be obtained was awaited. Further, a cured product that hardly turns yellow when irradiating light was awaited.

Means to Solve the Object

The present inventors have found a photocurable composition containing a terminal-modified (hydrogenated) polybutadiene having a specific structure, a (meth) acrylic acid ester monomer, and a photo-radical polymerization initiator having a specific structure. This photocurable composition can be photocured without yellowing and the resulting cured product shows good mechanical properties.

Specifically, the present invention relates to photocurable compositions and photocured products of the following (1) to (5).

(1) A photocurable composition comprising:

(A) a terminal-modified and optionally hydrogenated polybutadiene represented by formula [I]:

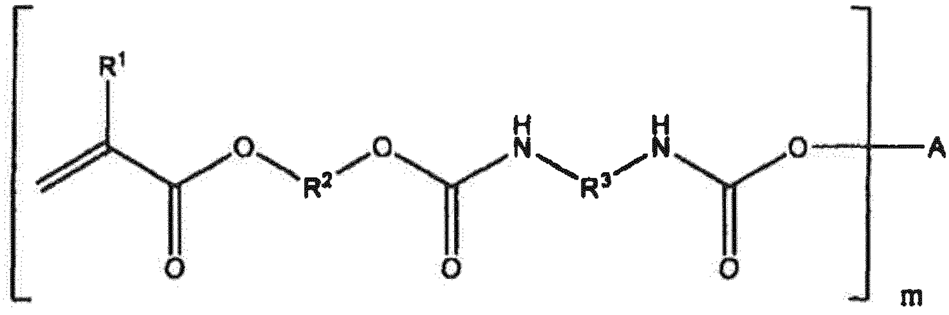

[I]

wherein $R^1$ represents a hydrogen atom or a methyl group, $R^2$ and $R^3$ each independently represent a C1-C10 linear or branched alkylene group, a C3-C8 cycloalkylene group optionally substituted with a C1-C6 alkyl group, or a combination of the groups thereof, A represents a polymer chain obtained by polymerizing butadiene or a polymer chain obtained by hydrogenating the polymer chain thereof, and m represents 1 or 2,
(B) a (meth)acrylic acid ester monomer, and
(C) a photo-radical polymerization initiator represented by formula [IV]:

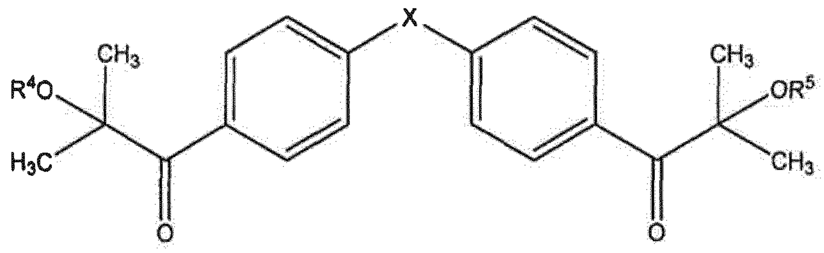

[IV]

wherein X represents any one selected from the group consisting of O, $CH_2$, $CH(CH_3)$, and $C(CH_3)_2$, and $R^4$ and $R^5$ each independently represent a hydrogen atom, a methyl group, or a trimethylsilyl group.

(2) The photocurable composition according to (1), wherein the photo-radical polymerization initiator represented by formula [IV] is 2-hydroxy-1-(4-(4-(2-hydroxy-2-methyl-propionyl)-benzyl)-ph enyl)-2-methyl-propan-1-one.
(3) The photocurable composition according to (1) or (2), comprising:

(C) 3 to 7 parts by weight of the photo-radical polymerization initiator, with respect to 100 parts by weight in total of
(A) the terminal-modified and optionally hydrogenated polybutadiene represented by formula [I], and
(B) the (meth)acrylic acid ester monomer.

(4) The photocurable composition according to any one of (1) to (3), wherein the terminal-modified and optionally hydrogenated polybutadiene represented by formula [I] is obtained by reacting an isocyanate compound represented by formula [II]:

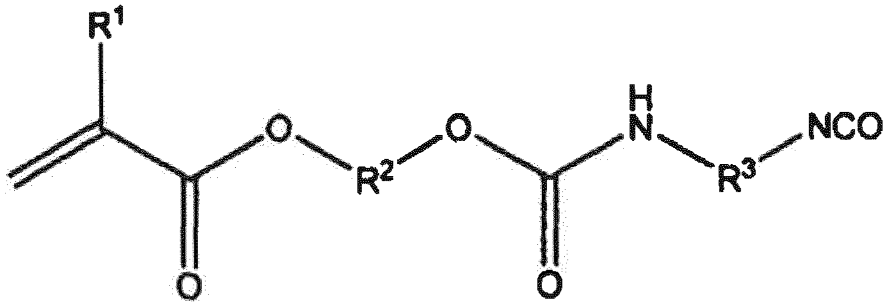

[II]

(wherein $R^1$, $R^2$, and $R^3$ have the same meaning as above), with a hydroxyl group-terminated polybutadiene or hydrogenated polybutadiene represented by formula [III]:

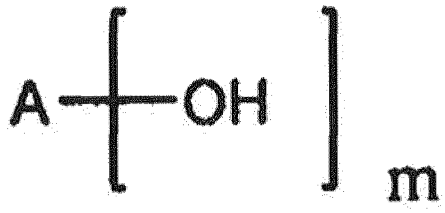

[III]

(wherein A and m have the same meaning as above).

(5) A cured product obtained by photocuring the photocurable composition according to any one of (1) to (4).

**Effect of the Invention**

A colorless and transparent cured product can be obtained by photocuring the photocurable composition of the present invention. The obtained cured product hardly turns yellow when irradiating light and has high heat resistance . A cured product showing good mechanical properties will be a material suitable for optical materials and the like.

**Mode of Carrying Out the Invention**

In the present invention, the definitions of substituents are as follows.

"A C1-C10 linear or branched alkylene group" of $R^2$ and $R^3$ includes a methylene group, an ethylene group, a propylene group, a methylethylene group, a butylene group, a 1,2-dimethylethylene group, a pentylene group, a 1-methylbutylene group, a 2-methylbutylene group, a hexylene group, and the like.

Examples of "a C1-C6 alkyl group" in "a C3-C8 cycloalkylene group optionally substituted by a C1-C6 alkyl group" of $R^2$ and $R^3$ include a methyl group, an ethyl group, an n-propyl group, an isopropyl group, an n-butyl group, a 1-methyl-n-propyl group, a 2-methyl-n-propyl group, a t- butyl group, an n-pentyl group, a 1-methyl-n-butyl group, a 2-methyl-n-butyl group, a 3-methyl-n-butyl group, a 1,1-dimethyl-n-propyl group, a 2,2-dimethyl-n-propyl group, a 1,2-dimethyl-n-propyl group, a 1-ethyl-n-propyl group, an n-hexyl group, a 1-methyl-n-pentyl group, a 2-methyl-n-pentyl group, a 3-methyl-n-pentyl group, a 4-methyl-n-pentyl group, a 1,1-dimethyl-n-butyl group, a 2,2-dimethyl-n-butyl group, a 3,3-dimethyl-n-butyl group, a 1,2-dimethyl-n-butyl group, a 1,3-dimethyl-n-butyl group, a 2,3-dimethyl-n-butyl group, a 1-ethyl-n-butyl group, a 2-ethyl-n-butyl group, and a 1-isopropyl-n-propyl group.

As the "C3-C8 cycloalkylene group optionally substituted by a C1-C6 alkyl group" of $R^2$ and $R^3$, cyclopropylene, 2-methylcyclopropylene, cyclobutylene, 2,2-dimethylcyclobutylene, cyclopentylene, 2,3-dimethylcyclopentylene, cyclohexylene, 1,3,3-trimethylcyclohexylene, cyclooctylene or the like may be examplified.

A "combination of the groups thereof" of $R^2$ and $R^3$ means "a group made by the combination of a C1-C10 linear or branched alkylene group and a C3-C8 cycloalkylene group optionally substituted by a C1-C6 alkyl group".

As the "group made by the combination of a C1-C10 linear or branched alkylene group and a C3-C8 cycloalkylene group optionally substituted by a C1 - C6 alkyl group", a methylene-cyclopropylene group, a methylene-cyclopentylene group, a methylene-2,3-dimethylcyclopentylene group, a methylene-1,3,3-trimethylcyclohexylene group, an ethylene-cyclopropylene group, an ethylene-cyclohexylene group, an ethylene-3,3-dimethylcyclohexylene group, a methylene-cyclopropylene-methylene group, an ethylene-cyclohexylene-methylene group, a hexylene-cyclohexylene-methylene group, or the like may be examplified. Further, the order of these sequences can be replaced in the groups.

(Photocurable Composition)

A photocurable composition of the present invention contains 0.1 to 20 parts by weight of a photo-radical polymerization initiator as component (C), with respect to 100 parts by weight in total of 5 to 40% by weight of a terminal-modified and optionally hydrogenated polybutadiene represented by formula [I] as component (A) and 95 to 60% by weight of a (meth) acrylic acid ester monomer as component (B) .

The photocurable composition of the present invention can contain the terminal-modified and optionally hydrogenated polybutadiene

represented by formula [I] as component (A), a (meth)acrylic acid ester monomer as component (B), and a photo-radical polymerization initiator represented by formula [IV] as component (C).

In this case, the added amount of each component is not particularly limited, but is preferably 0.1 to 20 parts by weight, and more preferably 3 to 7 parts by weight of component (C), with respect to 100 parts by weight in total of 20 to 90% by weight of component (A) and 80 to 10% by weight of component (B) .

The photocurable composition of the present invention can further contain other components, in addition to

component (A), component (B), and component (C).

(Component (A))

The component (A) contained in the photocurable composition of the present invention refers to a terminal-modified and optionally hydrogenated polybutadienes represented by following formula [I].

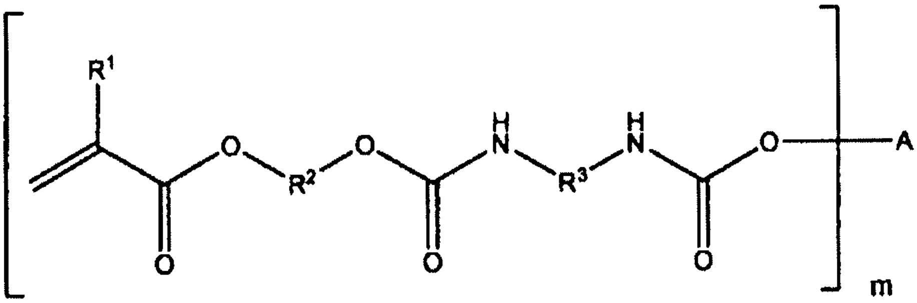

[I]

In formula [I], $R^1$ represents a hydrogen atom or a methyl group, $R^2$ and $R^3$ each independently represent a C1-C10 linear or branched alkylene group, a C3-C8 cycloalkylene group optionally substituted by a C1-C6 alkyl group, or a combination of the groups thereof, A represents a polymer chain obtained by polymerizing butadiene, or a polymer chain obtained by hydrogenating the polymer chain thereof, and m represents 1 or 2.

$R^2$ is preferably a linear C2-C10 alkylene group, more preferably a linear C2-C6 alkylene group, and still more preferably an ethylene or propylene group.

$R^3$ is preferably a linear C2-C6 alkylene group, or a group made by the combination of a linear or branched C1-C10 alkylene group and a C3-C8 cycloalkylene group optionally substituted by a C1-C6 alkyl group. Further, more preferably, a group made by the combination of a C1-C10 linear or branched alkylene group and C3-C8 cycloalkylene group optionally substituted by a C1-C6 alkyl group are bonded is a group represented by following formula (1) or (2). In formulae (1) and (2), *S represent binding positions.

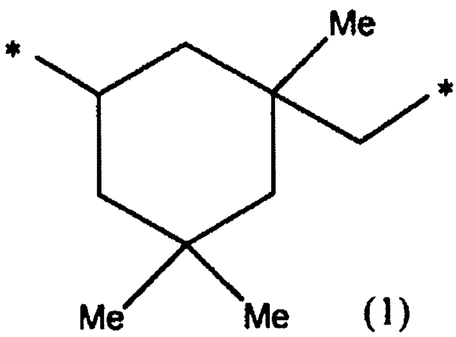

(1)

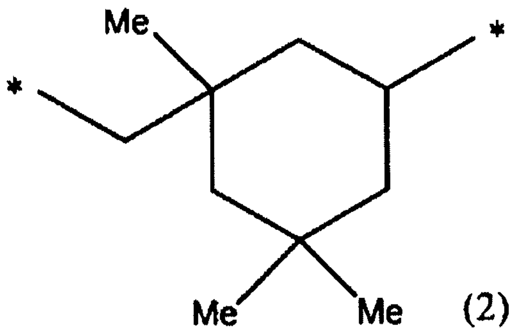

(2)

In formula [I], a polymer chain obtained by polymerizing butadiene, or a polymer chain obtained by hydrogenating the polymer chain thereof, represented by A, has as a skeleton,
a repeating unit of a 1,4-bond represented by formula [V]:

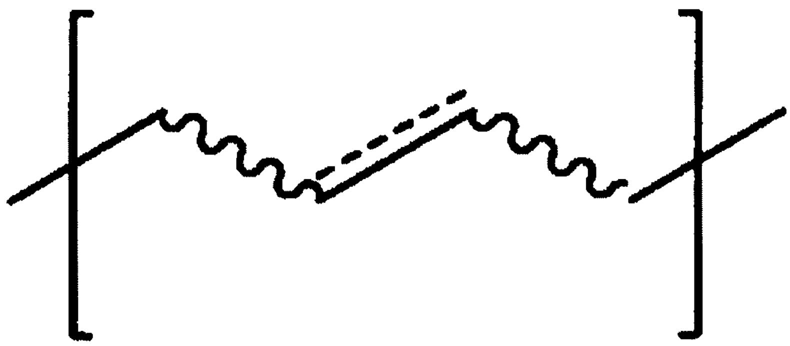

[V]

(wherein the double line portion described by solid and dotted lines represents a single bond or a double bond, and wavy lines represent either a cis- or trans-isomer in the case of a double bond), and a repeating unit of a 1, 2-bond represented by formula [VI] :

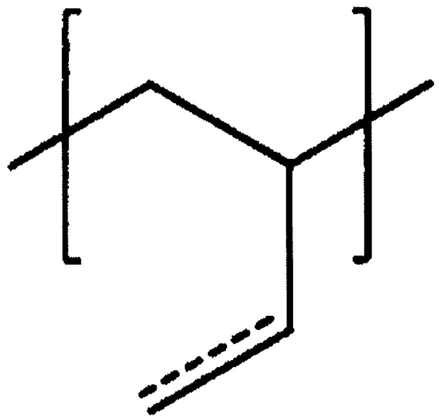

[V I]

(wherein the double line portion described by solid and dotted lines represents a single bond or a double bond).

When the double line portion described by solid and dotted lines represents a double bond, it is an unhydrogenated polybutadiene, and when the portion represents a single bond, it is a hydrogenated polybutadiene. In case of a hydrogenated polybutadiene, 100% hydrogenation of the double bonds is not required, and the residual ratio of the double bonds is not particularly limited.

Moreover, when the repeating unit of a 1,4-bond represented by formula [V] has a double bond, a trans-isomer, a cis-isomer, or a mixtures thereof can be present.

The ratio of the repeating unit of a 1,4-bond represented by formula [V], and the ratio of the 1,2-bond represented by formula [VI] are from 0 to 100 mol%, respectively. That is, in the present invention, a polymer chain represented by A may be comprised by only the repeating unit of 1,4-bonds or 1,2-bonds, or by a mixture of the repeating unit of 1,4-bonds and 1,2-bonds. In particular, preferably, the ratio of the repeating unit of 1,2-bonds is 75 to 100 mol%, and the ratio of the repeating unit of 1,4-bonds is 25 to 0 mol%.

A number average molecular weight of the terminal-modified and optionally hydrogenated polybutadiene represented by formula [I] measured by GPC (gel filtration) method using polystyrene as a standard is preferably 1,000 to 100,000, and more preferably 1,000 to 10,000.

A method of prepareing the terminal-modified and optionally hydrogenated polybutadiene represented by formula [I] is not particularly limited, and it can be prepared by the method described in Japanese Unexamined Patent Application Publication No. 2011-116965.

Preferably, the terminal-modified and optionally hydrogenated polybutadiene represented by formula [I] is obtained by reacting an isocyanate represented by formula [II] :

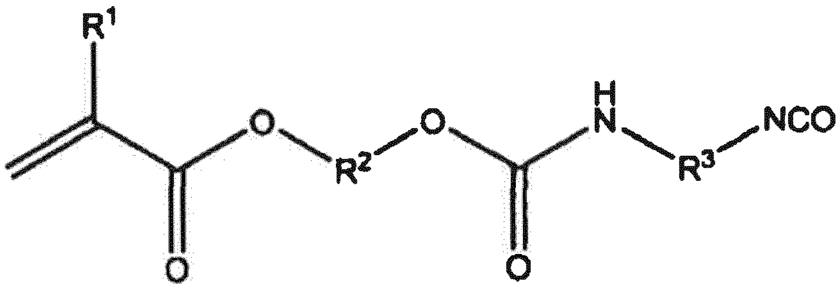

[II]

(wherein $R^1$, $R^2$, and $R^3$ have the same meaning as above), with a hydroxyl group-terminated polybutadiene or hydrogenated polybutadiene represented by formula [III]:

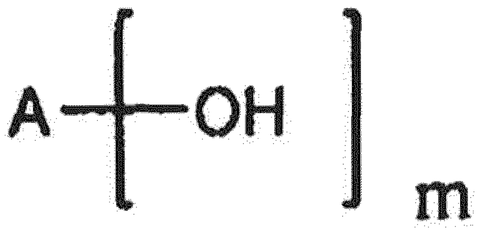

[III]

(wherein A and m have the same meaning as above) . Known methods described in Japanese Unexamined Patent Application Publication No. 2011-116965 and the like can be used as a method for preparing the compound represented by formula [II] and a method of reacting the compound represented by formula [II] with the compound represented by formula [III].

Specifically, as the compound represented by formula [III], NISSO-PB-G-1000, NISSO-PB-G-2000, NISSO-PB-G-3000, and the hydrogenated compounds thereof such as NISSO-PB-GI-1000, NISSO-PB-GI-2000, NISSO-PB-GI-3000 (all compounds are manufactured by Nippon Soda Co., Ltd.), and Poly bd R45HT (manufactured by Idemitsu Kosan Co., Ltd.). These compounds may be used alone or used by combination of two or more thereof.

The terminal-modified and optionally hydrogenated polybutadiene represented by formula [I] is preferably a compound represented by Table 1, and more preferably a compound represented by Table 2. In Table 1, $R^1$, $R^2$, A, and m have the same meaning as above, and in Table 2, $R^1$, A, and m have the same meaning as above.

[Table 1]

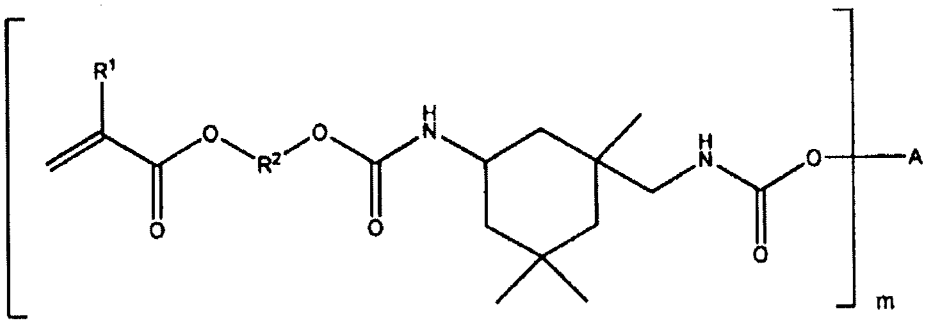

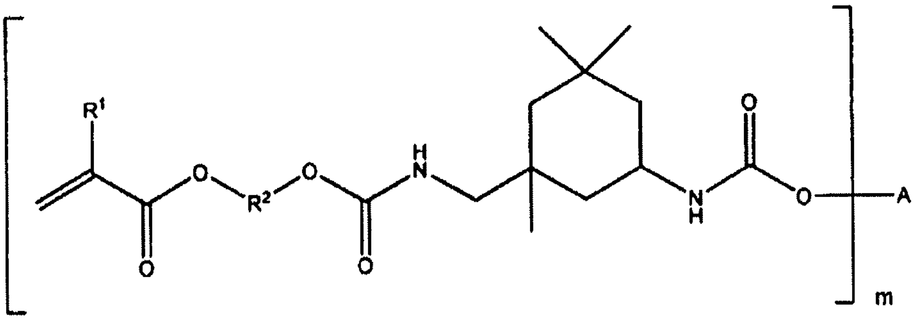

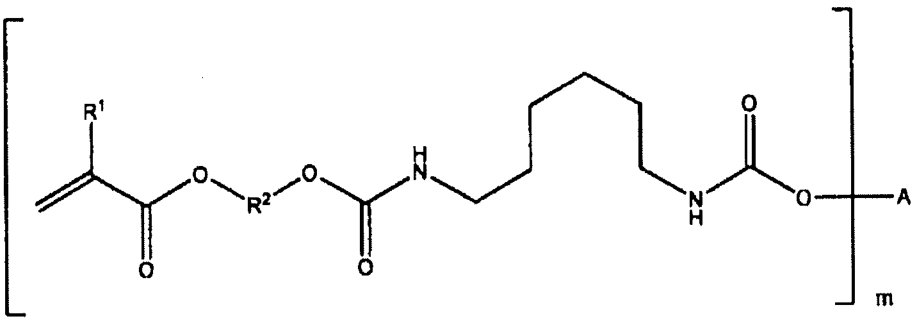

[Table 2]

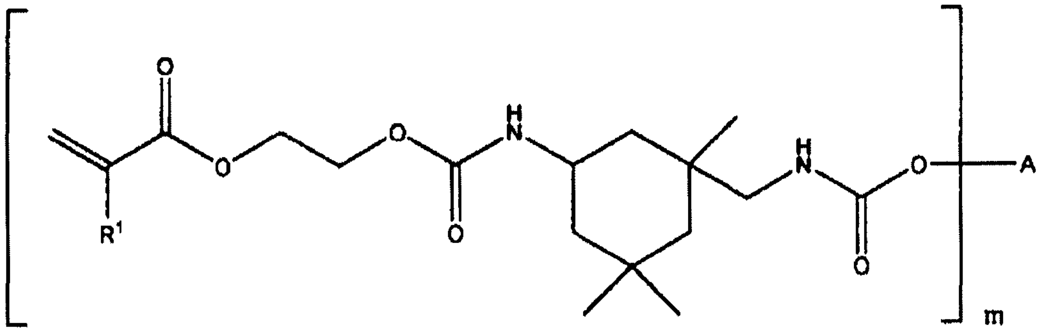

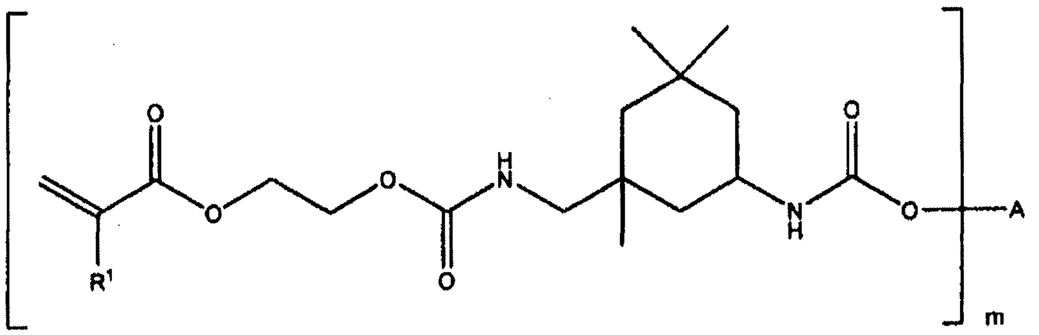

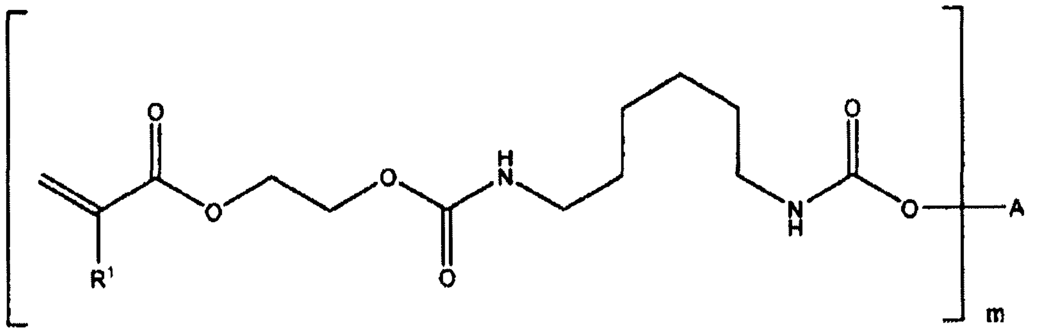

(Component (B))

The component (B) contained in the photocurable composition of the present invention is a (meth)acrylic acid ester monomer. As the (meth)acrylic acid ester monomer, monofunctional (meth)acrylate monomers such as methyl (meth)acrylate, ethyl (meth)acrylate, propyl (meth)acrylate, isopropyl (meth)acrylate, butyl (meth)acrylate, isobutyl (meth)acrylate, benzyl (meth)acrylate, phenoxyethyl (meth)acrylate, tetrahydrofurfuryl (meth)acrylate, lauryl (meth)acrylate, dicyclopentenyl (meth)acrylate, dicyclopentanyl (meth)acrylate, dicyclopentenyloxyethyl (meth)acrylate, isobornyl (meth)acrylate, 2,3-dibromopropyl (meth)acrylate, 2-hydroxyethyl (meth)acrylate, 2-hydroxypropyl (meth)acrylate, 3-hydroxypropyl (meth)acrylate, 3-dihydroxypropyl (meth)acrylate, 2,3-dihydroxypropyl (meth)acrylate, 2-hydroxyethyl (meth)acrylamide, 3-methacryloyloxypropyltrimethoxysilane, 11-methacryloyloxyundecyltrimethoxysilane, (meth)acrylamide,or the like,
bifunctional (meth)acrylate monomers such as ethylene glycol di(meth)acrylate, triethylene glycol di(meth)acrylate, propylene glycol di(meth)acrylate, polyethylene glycol di(meth)acrylate, polypropylene glycol di(meth)acrylate, neopentyl glycol di(meth)acrylate, 1,4-butanediol di(meth)acrylate, 1,6-hexanediol di(meth)acrylate, 1,9-nonanediol diacrylate, 1,10-decanediol di(meth)acrylate, tricyclodecanedimethanol di(meth)acrylate, dipentaerythritol di(meth)acrylate, bisphenol A diglycidyl (meth)acrylate, 2,2-bis[4-(meth)acryloyloxyethoxyphenyl]propane, 2,2-bis[4-(meth)acryloyloxypolyethoxyphenyl]propane, 2,2-bis[4-[3-(meth)acryloyloxy-2-hydroxypropoxy]phenyl]prop ane, 1,2-bis[3-(meth)acryloyloxy-2-hydroxypropoxy]ethane, pentaerythritol di(meth)acrylate, 1,2-bis(3-methacryloyloxy-2-hydroxypropoxy)ethane, [2,2,4-trimethylhexamethylenebis(2-carbamoyloxyethyl)]dimet hacrylate, and 1,3-di(meth)acryloyloxy-2-hydroxypropane, or the like,
trifunctional or higher functional (meth)acrylate monomers such as trimethylolpropane tri(meth)acrylate, trimethylolethane tri(meth)acrylate, tetramethylolmethane tri(meth)acrylate, pentaerythritol tetra(meth)acrylate, N,N'-(2,2,4-trimethylhexamethylene)bis[2-(aminocarboxy)prop ane-1,3-diol] tetramethacrylate, and 1,7-diacryloyloxy-2,2,6,6-tetraacryloyloxymethyl-4-oxyhepta ne, or the like may be exemplified.

In the present invention, among the monomers above, monofunctional (meth)acrylate monomers or bifunctional (meth)acrylate monomers are preferable, and isobornyl (meth)acrylate is more preferable. 1,6-Hexanediol di(meth)acrylate and tricyclodecanedimethanol di(meth)acrylate are still more preferable. These monomers can be used alone or used by combination of two or more thereof.

As the (meth) acrylic acid ester monomer in the component (B) contained in the photocurable composition of the present invention, tricyclodecanedimethanol di(meth) acrylate which is a bifunctional (meth)acrylate represented by formula [VII] is particularly preferable.

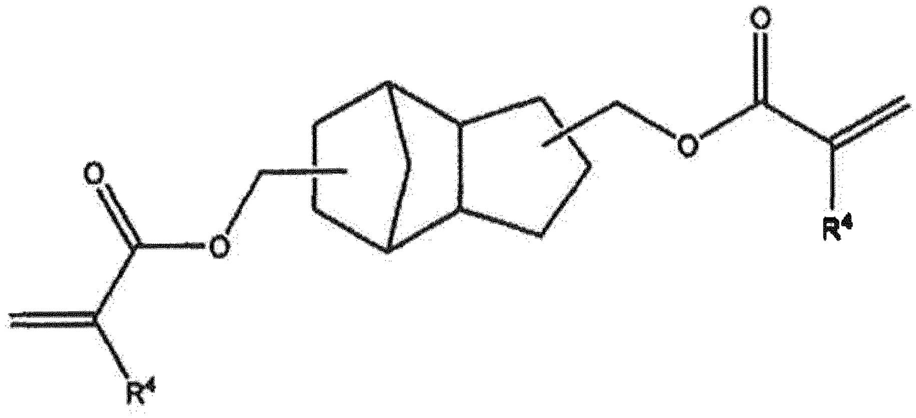

[V II]

In formula [VII], $R^4$ each independently represents a hydrogen atom or a methyl group. Tricyclodecanedimethanol di(meth)acrylate is commercially available.

(Component (C))

The component (C) contained in the photocurable composition of the present invention is a photo-radical polymerization initiator represented by formula [IV]:

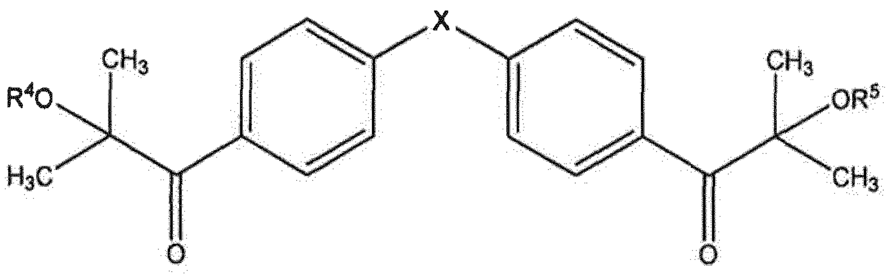

[I V]

(wherein X represents any one selected from the group consisting of O, $CH_2$, $CH(CH_3)$, and $C(CH_3)_2$, and $R^4$ and $R^5$ each independently represent a hydrogen atom, a methyl group, or a trimethylsilyl group).

The photo-radical polymerization initiator represented by formula [IV] is preferably 2-hydroxy-1-(4-(4-(2-hydroxy-2-methyl-propionyl)-benzyl)-ph enyl)-2-methyl-propan-1-one. 2-Hydroxy-1-(4-(4-(2-hydroxy-2-methyl-propionyl)-benzyl)-ph enyl)-2-methyl-propan-1-one (manufactured by Ciba Specialty Chemicals Co., Ltd., trade name: IRUGACURE (registered trademark) 127) is commercially available

(Other Components)

Other components may be added or mixed to the photocurable composition of the present invention, as long as its properties is not deteriorated, according to a purpose. Specifically, as the other components, a polymerization inhibitor may be exemplified. For instance, as the polymerization inhibitor, though it is not particularly limited, phenols such as 2,6-di-t-butyl-4-hydroxytoluene (BHT), 2,6-di-t-butyl-4-methylphenol, 2,2'-methylenebis(4-methyl-6-t-butylphenol), 4,4'-butylidenebis(3-methyl-6-t-butylphenol), 4,4'-thiobis(3-methyl-6-t-butylphenol), 3,9-bis[2-(3-(3-t-butyl-4-hydroxy-5-methylphenyl)-propionyl oxy)-1,1-dimethylethyl]-2,4,8,10-tetraoxaspiro(5,5)undecane, triethylene glycol-bis-3-(3-t-butyl-4-hydroxy-5-methylpenylpropionate, n-octadecyl-3-(3,5-di-t-butyl-4-hydroxyphenyl)propionate, i-octyl-3-(3,5-di-t-butyl-4-hydroxyphenyl)propionate, hexamethylene bis[3-(3,5-di-t-butyl-4-hydroxyphenyl)propionate, 4,6-bis(octylthiomethyl)-o-cresol, 4,6-bis(dodecylthiomethyl)-o-cresol, pentaerytolyl tetrakis[3-(3,5-di-t-butyl-4-hydroxyphenyl)propionate], tris(3,5-di-t-butylhydroxybenzyl)isocyanurate, tris(4-t-butyl-2,6-dimethyl-5-hydroxybenzyl)isocyanurate, 2,6-di-t-butyl-4-(4,6-bis(octylthio)-1,3,5-triazin-2-ylamin o)phenol, thiodiethylene bis[3-(3,5-di-t-butyl-4-hydroxyphenyl)propionate, N,N'-hexane-1,6-diylbis[3-(3,5-di-t-butyl-4-hydroxyphenylpr opionamide, 3,3',3",5,5',5"-hexa-t-butyl-a,a',a"-(mesitylene-2,4,6-triy 1)tri-p-cresol, or the like, calcium diethylene bis[[[3,5-bis(1,1-dimethylethyl)-4-hydroxyphenyl]methyl]pho sphonate]; quinones such as p-benzoquinone, anthraquinone, naphthoquinone, phenanthraquinone, p-toluquinone, 2,6-dichloroquinone, 2,5-diphenyl-p-benzoquinone, 2,5-diacetoxy-p-benzoquinone, 2,5-dicaproxy-p-benzoquinone, and 2,5-diacyloxy-p-benzoquinone; hydroquinones such as hydroquinone, p-t-butylcatechol, 2,5-di-t-butylhydroquinone, mono-t-butylhydroquinone, monomethylhydroquinone, 2,5-di-t-amylhydroquinone or the like; amines such as phenyl-p-naphthylamine, p-benzylaminophenol, di-β-naphthyl-p-phenylenediamine, dibenzylhydroxylamine, phenylhydroxylamine, diethylhydroxylamine, or the like; nitro compounds such as dinitrobenzenes, trinitrotoluene, picric acid or the like; oximes such as quinone dioxime, cyclohexanone oxime, or the like; phenothiazin, organic and inorganic copper salts, or the like may be exemplified and 2, 6-di-t-butyl-4-hydroxytoluene may be preferably exemplified. These compounds may be used alone or used by combination of two or more thereof.

The added amount of the polymerization inhibitor is not particularly limited, as long as the properties of the present invention is not deteriorated. Typically, the amount is 0.01 to 5 parts by weight with respect to 100 parts by weight in total of component (A) and component (B).

(Cured Product)

The photocurable composition of the present invention can be cured by light.

For example, ultraviolet rays, visible light, X-rays, and electron rays can be used as light, and it is preferable to use ultraviolet rays. Since the energy in ultraviolet rays is high, it is possible to accelerate a curing reaction by irradiating the curable composition with ultraviolet rays, and also it is possible to accelerate the curing rate of the curable composition, and it is possible to reduce the amount of the unreacted curable composition in the cured product.

As a method for irradiating with visible light, though it is not particularly limited, for instance, a method using an incandescent bulb, a fluorescent lamp or the like may be exemplified. As a method of irradiating with ultraviolet rays, though it is not particularly limited, a method using a metal halide lamp, a xenon lamp, a low pressure mercury lamp, a high pressure mercury lamp, an ultrahigh pressure mercury lamp, or the like as an electrode method, or an excimer lamp, a metal halide lamp, or the like as an electrodeless method may be exemplified. When using ultraviolet rays, their wavelength range is not particularly limited, but is preferably 150 nm to 400 nm, and more preferably 200 nm to 380 nm. The Irradiation of ultraviolet rays is carried out preferably under an inert gas such as nitrogen gas and carbon dioxide, or an atmosphere in which an oxygen concentration is reduced, but also may be carried out under a normal air. Typically, the temperature in the irradiated area may be 10 to 200°C.

Since a cured state can be measured with a Fourier transformed infrared spectrophotometer, a photochemical reaction calorimeter, and the like, curing conditions (such as light irradiation time, light intensity, heating temperature, and heating time) for curing completely can be selected as appropriate.

**Examples**

While the present invention will be explained in greater detail by referring to the Examples, it should be noted the present invention is not limited to the following Examples. In the following description, "part" represents parts by weight.

Abbreviations used in Examples and Comparative Examples refer to the followings:

IH-1000: a terminal-modified hydrogenated polybutadiene obtained in Production Example 1,
TEAI-1000: a terminal-modified hydrogenated polybutadiene manufactured by Nippon Soda Co., Ltd.,
HDDA: 1,6-hexanediol diacrylate (manufactured by Tokyo Chemical Industry Co., Ltd.),
TCDDA: tricyclodecanedimethanol diacrylate (manufactured by Sigma-Aldrich),
IRGACURE 127: 2-hydroxy-1-(4-(4-(2-hydroxy-2-methyl-propionyl)-benzyl)-ph enyl)-2-methyl-propan-1-one (manufactured by Ciba Japan K.K.),
IRGACURE 184: 1-hydroxy-cyclohexyl-phenyl ketone (manufactured by Ciba Japan K.K.),
IRGACURE 651: 2,2-dimethoxy-1,2-diphenylethan-1-one (manufactured by Ciba Japan K.K.),
LUCIRIN TPO: 2,4,6-trimethylbenzoyl-diphenyl-phosphine oxide (manufactured by BASF),
DAROCUR 1173: 2-hydroxy-2-methyl-1-phenyl-propan-1-one (manufactured by BASF),
DAROCUR MBF: phenylglyoxylic acid methyl ester (manufactured by BASF),
SB-PI 759: 1-(4-(2-hydroxyethoxy)-phenyl)-2-hydroxy-2-methylpropane (manufactured by Shuang-Bang Ind. crop.),

and
BHT: 2,6-di-t-butyl-4-hydroxytoluene (manufactured by Kyodo Chemical Co., Ltd.).

[Production Example 1]

In an air atmosphere, 784 parts of isophorone diisocyanate, 6.95 parts of Aluminum Chelate M, and 390 parts of hydroxyethyl acrylate were mixed, which was reacted at 65°C for one hour to synthesize a reactant A. Subsequently, in an air atmosphere, 1013 parts of the synthesized reactant A, 3000 parts of a hydroxyl group-terminated hydrogenated polybutadiene (GI-1000, manufactured by Nippon Soda Co. , Ltd.), and 24.1 parts of Aluminum Chelate M were mixed, which was reacted at 65°C for two hours. After it was confirmed that the residual NCO was not more than 0.1%, the reaction was quenched to produce a terminal-modified hydrogenated polybutadiene (hereinafter sometimes referred to as IH-1000).

$^{1}$H-NMR measurement was conducted on the resulting IH-1000 and two NH signals were confirmed (4.55 and 4.70 ppm). In addition, IR measurement was conducted to confirm the absorption of a urethane bond at 1728 (CO) and 3339 $cm^{-1}$ (NH) . GPC measurement was conducted on the obtained IH-1000 to give a number average molecular weight (Mn) of 3200. The viscosity (P, 45°C) was 3165, measured using a B-type viscometer.

In the following description, the "residual NCO (%)" represents a percentage by weight of the isocyanate moiety (a multiplier of the mole number and 42.02 (NCO molecular weight)) in a compound.

[Example 1-1] (Preparation of Photocurable Composition A)

4.00 parts of the terminal-modified hydrogenated polybutadiene (IH-1000) obtained in Production Example 1, 16.0 parts of isobornyl acrylate (manufactured by DAICEL-ALLNEX Ltd., trade name IBOA), 1.00 part of 2-hydroxy-2-methyl-1-phenyl-propan-1-one (manufactured by Ciba Japan K.K., trade name DAROCUR (registered trademark) 1173), and 0.1 parts of 2,6-di-t-butyl-4-hydroxytoluene were mixed (a rotation and revolution mixer: Awatori Rentaro (registered trademark), rotation 2000 rpm, 10 min, revolution 2200 rpm, 10 min) to obtain a photocurable composition A.

[Example 1-2] (Production of Cured Product A)

4.00 g of the photocurable composition A obtained in Example 1-1 was poured into an aluminum pan with a diameter of 6.5 cm, which was photo-irradiated with an ultrahigh pressure mercury lamp (10 mW; parallel light type) for eight minutes to obtain a cured product A with a thickness of about 1.0 mm.

[Comparative Example 1-1] (Preparation of Photocurable Composition B)

10.0 parts of the terminal-modified hydrogenated polybutadiene A obtained in Production Example 1, 10.0 parts of isobornyl acrylate (manufactured by DAICEL-ALLNEX Ltd., trade name IBOA), 1.0 part of 2-hydroxy-2-methyl-1-phenyl-propan-1-one (manufactured by Ciba Japan K.K., trade name Darocur (registered trademark) 1173), and 0.1 parts of 2,6-di-t-butyl-4-hydroxytoluene were mixed (a rotation and revolution mixer: Awatori Rentaro (registered trademark), rotation 2000 rpm, 10 min, revolution 2200 rpm, 10 min) to obtain a photocurable composition B.

[Comparative Example 1-2] (Production of Cured Product B)

4.00 g of the photocurable composition B obtained in Comparative Example 1-1 was poured into an aluminum pan with a diameter of 6.5 cm, which was photo-irradiated with an ultrahigh pressure mercury lamp (10 mW; parallel light type) for eight minutes to obtain a cured product B with a thickness of about 1.0 mm.

[Comparative Example 2-1] (Preparation of Photocurable composition C)

Comparative Example 1-1 was repeated to obtain a photocurable composition C, except that TEAI-1000 (a terminal-modified hydrogenated polybutadiene: manufactured by Nippon Soda Co., Ltd.) was used in place of the terminal-modified hydrogenated polybutadiene A obtained in Production Example 1.

[Comparative Example 2-2] (Production of Cured Product C)

4.00 g of the photocurable composition C obtained in Comparative Example 2-1 was poured into an aluminum pan with a diameter of 6.5 cm, which was photo-irradiated with an ultrahigh pressure mercury lamp (10 mW; parallel light type) for eight minutes to obtain a cured product C with a thickness of about 1.0 mm.

[Comparative Example 3-1] (Preparation of Photocurable Composition D)

16.0 parts of the terminal-modified hydrogenated polybutadiene A obtained in Production Example 1, 4.0 parts of isobornyl acrylate (manufactured by DAICEL-ALLNEX Ltd., trade name IBOA), 1.0 part of 2-hydroxy-2-methyl-1-phenyl-propan-1-one (manufactured by Ciba Japan K.K., trade name Darocur (registered trademark) 1173), and 0.1 parts of 2,6-di-t-butyl-4-hydroxytoluene were mixed (a rotation and revolution mixer: Awatori Rentaro (registered trademark), rotation 2000 rpm, 10 min, revolution 2200 rpm, 10 min) to obtain a photocurable composition D.

[Comparative Example 3-2] (Production of Cured Product D)

4.00 g of the photocurable composition D obtained in Comparative Example 3-1 was poured into an aluminum pan with a diameter of 6.5 cm, which was photo-irradiated with an ultrahigh pressure mercury lamp (10 mW; parallel light type) for ten minutes to obtain a cured product D with a thickness of about 1.0 mm.

[Comparative Example 4-1] (Preparation of Photocurable Composition E)

Comparative Example 3-1 was repeated to obtain a photocurable composition E, except that TEAI-1000 (a terminal-modified hydrogenated polybutadiene: manufactured by Nippon Soda Co., Ltd.) was used in place of the terminal-modified hydrogenated polybutadiene A obtained in Production Example 1.

[Comparative Example 4-2] (Production of Cured Product E)

4.00 g of the photocurable composition E obtained in Comparative Example 4-1 was poured into an aluminum pan with a diameter of 6.5 cm, which was photo-irradiated with an ultrahigh pressure mercury lamp (10 mW; parallel light type) for ten minutes to obtain a cured product E with a thickness of about 1.0 mm.

(Hue Evaluation Test)

Hue evaluation tests of the cured products A, B, C, D, and E were conducted under the following conditions.

(1) Hue evaluation tests of the cured products

Specimens with a width of 25 mm, a length of 50 mm, and a thickness of about 1 mm were made for the cured products A, B, C, D, and E immediately after production, and the L* value, the a* value, and the b* value were determined for each of the specimens by the reflection method using a spectral color-difference meter ("SE-2000": manufactured by NIPPON DENSHOKU INDUSTRIES Co., LTD). The obtained results are shown in Table 3.

L* values, a* values, and b* values are a type of methods (color systems) for representing colors and numerically represent brightness (L* lightness) and color tone (a* = red - green, b* = yellow - blue) of specific colors using three axes/index.

(2) Hue evaluation tests of cured products after ultraviolet irradiation

Irradiation was conducted on each of the cured products A, B, C, D, and E with a width of 25 mm, a length of 50 mm, and a thickness of about 1 mm, using a Suga UV fade meter U48 (manufactured by Suga Test Instruments Co., Ltd.), at a chamber temperature of about 30°C, at a humidity of 50%, under the irradiation conditions of 500 w/$m^2$, 300 to 700 nm, for 16 hours. A hue evaluation test was conducted on each of the cured products A, B, C, D, and E after 16-hour irradiation under the same conditions as in (1). The obtained results are shown in Table 3.

(Determination of Hardness)

A laminate of six specimens with a thickness of 1 mm was made for each of the cured products A, B, C, D, and E immediately after production, and hardness was determined using a durometer according to JIS K 7215. The obtained results are shown in Table 3.

[Table 3]

| | Cured product | Hue | | | | | | Hardness | |
|---|---|---|---|---|---|---|---|---|---|
| | | Immediately after production | | | After ultraviolet irradiation | | | Durometer | |
| | | L* | a* | b* | L* | a* | b* | (A) | (D) |
| Example | A | 91.3 | -0.6 | 1.2 | 83.4 | -1.5 | 4.6 | - | 60 |
| Comparative example | B | 90.5 | -0.7 | 1.6 | 86.6 | -1.5 | 4.2 | 98 | 37 |
| | C | 89.8 | -0.6 | 1.7 | 85.9 | -2.0 | 8.1 | 98 | 33 |
| | D | 91.1 | -0.5 | 1.3 | 89.8 | -2.4 | 6.9 | 68 | - |
| | E | 90.6 | -0.3 | 1.0 | 87.4 | -3.7 | 21.5 | 66 | - |
| In the table above, "-" refers to "not measured". | | | | | | | | | |

[Example 2] (Preparation of Photocurable Compositions A' to P')

IH-1000, a (meth)acrylic acid ester monomer, 1-hydroxycyclohexyl phenyl ketone (manufactured by Ciba Japan K.K., trade name IRGACURE (registered trademark) 184), and BHT were mixed (a rotation and revolution mixer: Awatori Rentaro (registered trademark), rotation 2000 rpm, 10 min, revolution 2200 rpm, 10 min) to obtain photocurable compositions A' to P' .

[Table 4]

| | | Composition (part) | | | | | | | | | | | | | | | |
|---|---|---|---|---|---|---|---|---|---|---|---|---|---|---|---|---|---|
| | | Example | | | | | | | | Comparative example | | | | | | | |
| | | A' | B' | C' | D' | E' | F' | G' | H' | I' | J' | K' | L' | M' | N' | O' | P' |
| Component (A) | IH-1000 | 16 | 16 | 10 | 10 | 16 | 16 | 16 | 16 | 16 | 16 | - | - | - | - | - | - |
| | TEAI-1000 | - | - | - | - | - | - | - | - | - | - | 16 | 16 | 16 | 16 | 10 | 10 |
| Component (B) | HDDA | - | - | - | - | - | - | - | - | 4 | 4 | 4 | 4 | - | - | - | - |
| | TCDDA | 4 | 4 | 10 | 10 | 4 | 4 | 4 | 4 | - | - | - | - | 4 | 4 | 10 | 10 |

Examples A' - D' are not within the scope of the claims.

| Other component | Component (C) | |
|---|---|---|
| BHT | IRGACUR E127 | IRGACUR E184 |
| - | - | 1 |
| 0.1 | - | 1 |
| - | - | 1 |
| 0.1 | - | 1 |
| - | 0.5 | - |
| - | 1 | - |
| 0.1 | 1 | - |
| 0.1 | 2 | - |
| - | - | 1 |
| 0.1 | - | 1 |
| - | - | 1 |
| 0.1 | - | 1 |
| - | - | 1 |
| 0.1 | - | 1 |
| - | - | 1 |
| 0.1 | - | 1 |

(Production of cured products A' to G' and I' to P')

4.00 g of the photocurable compositions A to G and I to P were poured into aluminum pans with a diameter of 6.5 cm, which were photo-irradiated with an ultrahigh pressure mercury lamp (10 mW; parallel light type) for five minutes to obtain cured products A to G' and I' to P with a thickness of about 1.0 mm.

(Hue Evaluation Test)

Hue evaluation tests of the cured products A' to G' and I' to P' were conducted under the following conditions.

Specimens with a width of 25 mm, a length of 50 mm, and a thickness of about 1 mm were made for the cured products A' to G' and I' to P' immediately after production, and the L* value, the a* value, and the b* value were determined for each of the specimens by the reflection method using a spectral color-difference meter ("SE-2000": manufactured by NIPPON DENSHOKU INDUSTRIES Co., LTD). The results obtained are shown in Table 4.

L* values, a* values, and b* values are a type of methods (color systems) for representing colors and numerically represent brightness (L* lightness) and color tone (a* = red - green, b* = yellow - blue) of specific colors using three axes/index.

(Determination of Hardness)

A laminate of six specimens with a thickness of 1 mm was made for each of the cured products A' to D' and I' to P' and hardness was determined using a durometer according to JIS K 7215. The obtained results are shown in Table 4.

(Tensile Test)

A specimen with a width of 5 mm, a length of 50 mm, and a thickness of about 1 mm was made for each of the cured products A', B', E' to G', and I' to N', and tensile a test was conducted on each of the specimens under the following conditions using AUTOGRAPH AGG-J of Shimadzu Corporation to determine the stress (MPa) and the elastic modulus. The obtained results are shown in Table 4.
Temperature: 24°C
Humidity: 60%
Distance between grippers: 20 mm
Tensile speed: 20 mm/min
Tensile load, load cell: 5 kN

An elastic modulus is a tensile elastic modulus in a range of the testing force (1 to 2 N) and was calculated by the following calculation formula.

Tensile elastic modulus = [Δtesting force (N)/specimen cross-sectional area ($mm^2$)]/[Δstrain (mm)/distance between grippers (mm)]

Stress (MPa) = maximum stress (MPa)

[Table 5]

| | Cured product | Hue | | | Hardness | | Tensile test | |
|---|---|---|---|---|---|---|---|---|
| | | L* | a* | b* | Durometer (A) | Durometer (D) | Stress (MPa) | Elastic modulus |
| Example | A' | 86.1 | -0.3 | 0.9 | 95 | - | 4.1 | 53.2 |
| | B' | 85.7 | -0.4 | 0.9 | 94 | - | 4.4 | 55.1 |
| | C' | 88.8 | -0.6 | 3.6 | - | 73 | - | - |
| | D' | 85.3 | -0.5 | 2.5 | - | 72 | - | - |
| | E' | 92.3 | -0.5 | 1.5 | - | - | 5.4 | 57.2 |
| | F' | 92.1 | -0.4 | 1.5 | - | - | 5.2 | 49.4 |
| | G' | 91.3 | -0.4 | 1.5 | - | - | 4.7 | 47.4 |
| Comparative example | I' | 92.5 | -0.3 | 0.7 | 91 | - | 2.1 | 30.2 |
| | J' | 92.0 | -0.4 | 0.9 | 88 | - | 1.7 | 32.1 |
| | K' | 90.8 | -0.3 | 1.4 | 91 | - | 2.7 | 25.3 |
| | L' | 91.3 | -0.4 | 1.2 | 92 | - | 1.9 | 29.4 |
| | M' | 86.3 | -0.3 | 0.8 | 95 | - | 4.0 | 37.9 |
| | N' | 89.8 | -0.3 | 0.9 | 94 | - | 3.7 | 46.7 |
| | O' | 86.7 | -0.4 | 1.5 | - | 74 | - | - |
| | P' | 86.0 | -0.4 | 1.4 | - | 73 | - | - |

Examples A' - D' are not within the scope of the claims.

Examples A' - D' are not within the scope of the claims.

In the table above, "-" refers to "not measured".

(Hue Evaluation Tests of Cured Products after Ultraviolet Irradiation)

Irradiation was conducted on each of the cured products A' to D' and I' to P' with a width of 25 mm, a length of 50 mm, and a thickness of about 1 mm, using a Suga UV fade meter U48 (manufactured by Suga Test Instruments Co.,

Ltd.), at a chamber temperature of about 30°C, at a humidity of 50%, under the irradiation conditions of 500 w/$m^2$, 300 to 700 nm. An evaluation test was conducted on each of the cured products A to D and J to P after 48- and 96-hour irradiations under the same conditions as in the hue evaluation tests described above. The obtained results are shown in Table 6.

[Table 6]

| | Cured product | Hue (After 48 hours) | | | Hue (After 96 hours) | | |
|---|---|---|---|---|---|---|---|
| | | L* | a* | b* | L* | a* | b* |
| Comparative example | A' | 92.1 | -0.9 | 2.5 | 91.7 | -1.1 | 2.6 |
| | B' | 92.4 | -1.6 | 4.2 | 92.2 | -1.6 | 4.3 |
| | C' | 90.1 | -1.3 | 5.9 | 89.5 | -1.5 | 6.0 |
| | D' | 92.1 | -1.5 | 4.7 | 91.9 | -1.5 | 4.7 |
| | J' | 90.3 | -2.3 | 6.6 | 90.0 | -1.9 | 5.4 |
| | K' | 85.8 | -1.5 | 16.9 | 84.9 | -1.4 | 20.6 |
| | L' | 86.4 | -2.9 | 22.4 | 85.8 | -2.3 | 25.1 |
| | M' | 89.3 | -1.7 | 13.9 | 87.7 | -1.8 | 18.9 |
| | N' | 89.2 | -2.1 | 14.6 | 87.0 | -1.9 | 18.9 |
| | O' | 87.4 | -1.4 | 6.7 | 83.1 | -1.7 | 8.5 |
| | P' | 91.0 | -1.5 | 6.8 | 90.5 | -1.7 | 8.8 |

[Example 3] (Preparation of Photocurable Compositions A" to H")

With the compositions shown in Table 3, a terminal-modified hydrogenated polybutadiene, a (meth) acrylic acid ester monomer, 2-hydroxy-1-(4-(4-(2-hydroxy-2-methyl-propionyl)-benzyl)-ph enyl) -2-methyl- propan-1-one (manufactured by Ciba Japan K.K., trade name IRGACURE (registered trademark) 127), and BHT were mixed (a rotation and revolution mixer: Awatori Rentaro (registered trademark), rotation 2000 rpm, 10 min, revolution 2200 rpm, 10 min) to obtain photocurable compositions A" to H".

[Table 7]

| | | Example | | | | | | | |
|---|---|---|---|---|---|---|---|---|---|
| | | Composition (part) | | | | | | | |
| | | A" | B" | C" | D" | E" | F" | G" | H" |
| Component (A) | IH-1000 | 16 | 16 | 16 | 16 | 16 | 16 | 16 | 16 |
| Component (B) | HDDA | 4 | 4 | 4 | 4 | - | - | - | - |
| | TCDDA | - | - | - | - | 4 | 4 | 4 | 4 |
| Component (C) | IRGACURE 127 | 0.5 | 1 | 1 | 2 | 0.5 | 1 | 1 | 2 |
| Other component | BHT | - | - | 0.1 | 0.1 | - | - | 0.1 | 0.1 |

(Preparation of Photocurable Compositions I" to U")

With the compositions shown in Table 4, a terminal-modified hydrogenated polybutadiene, a (meth) acrylic acid

ester monomer, a photo-radical polymerization initiator, and dibutylhydroxytoluene (hereinafter sometimes referred to as BHT) were mixed (a rotation and revolution mixer: Awatori Rentaro (registered trademark), rotation 2000 rpm, 10 min, revolution 2200 rpm, 10 min) to obtain photocurable compositions I" to U".

[Table 8]

| | | Comparative example | | | | | | | | | | | | |
|---|---|---|---|---|---|---|---|---|---|---|---|---|---|---|
| | | Composition (part) | | | | | | | | | | | | |
| | | I" | J" | K" | L" | M" | N" | O" | P" | Q" | R" | S" | T" | U" |
| Component (A) | IH-1000 | - | 16 | - | - | 16 | - | 16 | - | 16 | - | 16 | - | 16 |
| | TEAI-1000 | 16 | - | 16 | 16 | - | 16 | - | 16 | - | 16 | - | 16 | - |
| Component (B) | HDDA | 4 | 4 | 4 | 4 | 4 | 4 | 4 | 4 | 4 | 4 | 4 | 4 | 4 |
| Component (C) | IRGACURE651 | 1 | 1 | - | - | - | - | - | - | - | - | - | - | - |
| | IRGACURE127 | - | - | 1 | - | - | - | - | - | - | - | - | - | - |
| | IRGACURE184 | - | - | - | 1 | 1 | - | - | - | - | - | - | - | - |
| | LUCIRIN TPO | - | - | - | - | - | 1 | 1 | - | - | - | - | - | - |
| | DAROCUR1173 | - | - | - | - | - | - | - | 1 | 1 | - | - | - | - |
| | DAEOCUR MBF | - | - | - | - | - | - | - | - | - | 1 | 1 | - | - |
| | SB-PI 759 | - | - | - | - | - | - | - | - | - | - | - | 1 | 1 |
| Other component | BHT | 0.1 | 0.1 | 0.1 | 0.1 | 0.1 | 0.1 | 0.1 | 0.1 | 0.1 | 0.1 | 0.1 | 0.1 | 0.1 |

(Production of Cured Products A" to U")

The photocurable compositions A" to U" were poured into aluminum pans with a diameter of 6.5 cm, which were photo-irradiated with an ultrahigh pressure mercury lamp (10 mW; parallel light type) for five minutes to obtain cured products A" to U" with a thickness of about 1.0 mm.

(Hue Evaluation Test)

Hue evaluation tests of the resulting cured products A" to I", J", L" to Q", and T" were conducted under the following conditions.

Specimens with a width of 25 mm, a length of 50 mm, and a thickness of about 1 mm were made for the cured products A" to I", J", L" to Q", and T" immediately after production, and the L* value, the a* value, and the b* value were determined for each of the specimens by the reflection method using a spectral color-difference meter ("SE-2000": manufactured by NIPPON DENSHOKU INDUSTRIES Co., LTD). The obtained results are shown in Table 5.

L* values, a* values, and b* values are a type of methods (color systems) for representing colors and numerically represent brightness (L* lightness) and color tone (a* = red - green, b* = yellow - blue) of specific colors using three axes/index.

(Determination of Hardness)

A laminate of six specimens with a thickness of 1 mm was made for each of the cured products A" to I", J", L" to Q", and T" immediately after production, and hardness was determined using a durometer according to JIS K 7215. The results obtained are shown in Table 9.

(Tensile Test)

A specimen with a width of 5 mm, a length of 50 mm, and a thickness of about 1 mm was made for each of the cured products A" to I", J", L" to Q", and T", and a tensile test was conducted on each of the specimens under the following conditions using AUTOGRAPH AGG-J of Shimadzu Corporation to determine the strain (%). The obtained results are shown in Table 5.

The values of strain (%) were calculated according to the following formula.

$$\text{Strain (\%)} = 100 \times (\text{maximum point displacement/distance between grippers})$$

Temperature: 24°C
Humidity: 60%
Distance between grippers: 20 mm
Tensile speed: 20 mm/min
Tensile load, load cell: 5 kN

[Table 9]

| | Cured product | Hue | | | Hardness | Tensile test |
|---|---|---|---|---|---|---|
| | | L* | a* | b* | Durometer (A) | Strain (%) |
| Example | A" | 92.3 | -0.3 | 1.0 | 90 | 11.4 |
| | B" | 92.6 | -0.4 | 1.3 | 90 | 13.2 |
| | C" | 92.3 | -0.5 | 1.6 | 90 | 18.6 |
| | D" | 88.4 | -0.4 | 2.7 | 87 | 14.1 |
| | E" | 92.3 | -0.5 | 1.5 | - | 19.7 |
| | F" | 92.1 | -0.4 | 1.5 | - | 24.3 |
| | G" | 91.3 | -0.4 | 1.5 | - | 26.4 |
| | H" | 91.0 | -0.5 | 2.1 | - | 33.2 |
| Comparative example | I" | 91.2 | -1.5 | 3.7 | 91 | 9.7 |
| | J" | 91.8 | -1.4 | 3.0 | 90 | 8.7 |
| | L" | 91.3 | -0.4 | 1.2 | 92 | 6.9 |
| | M" | 92.0 | -0.4 | 0.9 | 88 | 8.4 |
| | N" | 88.0 | -10.9 | 22.0 | 91 | 11.6 |
| | O" | 88.4 | -9.8 | 19.6 | 93 | 19.3 |
| | P" | 91.5 | -0.4 | 1.0 | 95 | 7.7 |
| | Q" | 91.9 | -0.6 | 1.5 | 92 | 9.6 |
| | T" | 86.6 | -0.7 | 2.2 | 90 | 9.3 |

In the table above, "-" refers to "not measured".

(Hue Evaluation Tests of Cured Products after Ultraviolet Irradiation)

Irradiation was conducted on each of the cured products C, I" to L", N", P", and T" with a width of 25 mm, a length of 50 mm, and a thickness of about 1 mm, using a Suga UV fade meter U48 (manufactured by Suga Test Instruments Co., Ltd.), at a chamber temperature of about 30°C, at a humidity of 50%, under the irradiation conditions of 500 w/m$^2$, 300 to 700 nm. An evaluation test of each of the cured products C", I" to L", N", P", and T" after 48- and 96-hour irradiations was conducted under the same conditions as in the hue evaluation tests described above. The obtained results are shown in Table 10.

[Table 10]

| | Cured product | Hue (After 48 hours) | | | Hue (After 96 hours) | | |
|---|---|---|---|---|---|---|---|
| | | L* | a* | b* | L* | a* | b* |
| Comparative example | I" | 84.1 | -2.5 | 31.1 | 81.7 | -1.0 | 33.6 |
| Comparative example | J" | 88.8 | -5.3 | 21.3 | 88.4 | -4.6 | 20.6 |

(continued)

| | Cured product | Hue (After 48 hours) | | | Hue (After 96 hours) | | |
|---|---|---|---|---|---|---|---|
| | | L* | a* | b* | L* | a* | b* |
| Comparative example | K" | 85.4 | -2.4 | 24.8 | 82.9 | -1.2 | 28.9 |
| Example | C" | 90.1 | -4.1 | 12.7 | 89.7 | -4.3 | 14.1 |
| Comparative example | L" | 86.4 | -2.9 | 22.4 | 85.8 | -2.3 | 25.1 |
| Comparative example | N" | 87.0 | -1.9 | 14.2 | 84.6 | -1.7 | 21.3 |
| Comparative example | P" | 85.0 | -2.7 | 22.1 | 83.6 | -2.0 | 24.5 |
| Comparative example | T" | 79.5 | -1.1 | 25.1 | 78.5 | 0.3 | 27.6 |

(Hue Evaluation Tests of Cured Products after Exposure to Heat)

Each of the cured products C", I", K", N", P", R", and S" to U" with a width of 25 mm, a length of 50 mm, and a thickness of about 1 mm was stored at a chamber temperature of about 130°C for 96 hours. After 96 hours, an evaluation test of each of the cured products was conducted under the same conditions as in the hue evaluation tests described above. The obtained results are shown in Table 11.

[Table 11]

| | Cured product | Hue (After 96 hours) | | |
|---|---|---|---|---|
| | | L* | a* | b* |
| Comparative example | I" | Unmeasurable | | |
| Comparative example | K" | Unmeasurable | | |
| Example | C" | 89.2 | -5.5 | 15.5 |
| Comparative example | N" | Unmeasurable | | |
| Comparative example | P" | Unmeasurable | | |
| Comparative example | R" | Unmeasurable | | |
| Comparative example | S" | Unmeasurable | | |
| Comparative example | T" | Unmeasurable | | |
| Comparative example | U" | Unmeasurable | | |
| "Unmeasurable" in the table means that the hue evaluation tests were not able to be conducted due to the contraction of the cured products. | | | | |

**Industrial Applicability**

A colorless and tranparent cured product can be obtained by photocuring the photocurable composition of the present invention. The resulting cured product is resistant to yellowing when light-irradiated, and has good mechanical properties, thus the cured product can be a material suitable for optical materials and the like.

## Claims

**1.** A photocurable composition comprising:

(A) a terminal-modified and optionally hydrogenated polybutadiene represented by formula [I]:

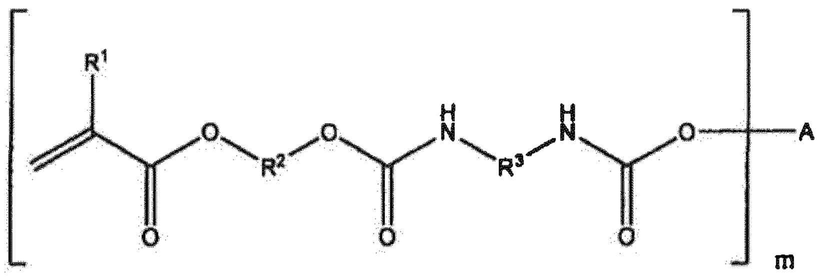

[I]

wherein $R^1$ represents a hydrogen atom or a methyl group, $R^2$ and $R^3$ each independently represent a C1-C10 linear or branched alkylene group, a C3-C8 cycloalkylene group optionally substituted with a C1-C6 alkyl group, or a combination of the groups thereof, A represents a polymer chain obtained by polymerizing butadiene or a polymer chain obtained by hydrogenating the polymer chain thereof, and m represents 1 or 2,

(B) a (meth)acrylic acid ester monomer, and

(C) a photo-radical polymerization initiator represented by formula [IV]:

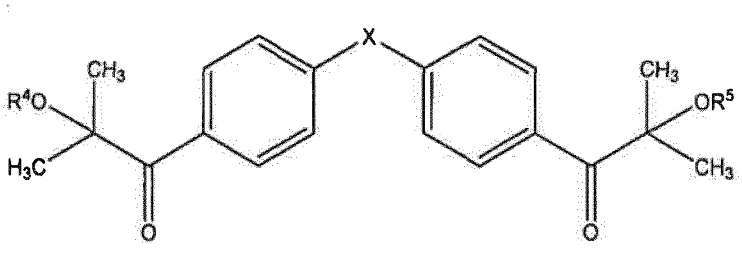

[IV]

wherein X represents any one selected from the group consisting of 0, $CH_2$, $CH(CH_3)$, and $C(CH_3)_2$, and $R^4$ and $R^5$ each independently represent a hydrogen atom, a methyl group, or a trimethylsilyl group.

**2.** The photocurable composition according to claim 1, wherein the photo-radical polymerization initiator represented by formula [IV] is 2-hydroxy-1-(4-(4-(2-hydroxy-2-methyl-propionyl)-benzyl)-phenyl)-2-methyl-propan-1-one.

**3.** The photocurable composition according to claim 1 or 2, comprising:

(C) 3 to 7 parts by weight of the photo-radical polymerization initiator, with respect to 100 parts by weight in total of

(A) the terminal-modified (hydrogenated) polybutadiene represented by formula [I], and

(B) the (meth)acrylic acid ester monomer.

**4.** The photocurable composition according to any one of claims 1 to 3, wherein the terminal-modified and optionally hydrogenated polybutadiene represented by formula [I] is obtained by reacting an isocyanate represented by formula [II]:

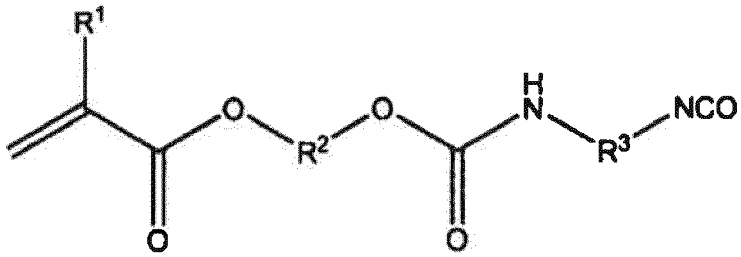

[II]

wherein $R^1$, $R^2$, and $R^3$ have the same meaning as above, with a hydroxyl group-terminated polybutadiene or hydrogenated polybutadiene represented by formula [III] :

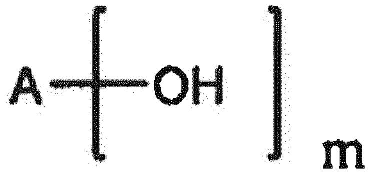

[III]

wherein A and m have the same meaning as above.

5. A cured product obtained by photocuring the photocurable composition as claimed in any one of claims 1 to 4.

**Patentansprüche**

1. Fotohärtbare Zusammensetzung umfassend:

(A) ein terminal-modifiziertes und gegebenenfalls hydriertes Polybutadien wiedergegeben durch Formel [I]:

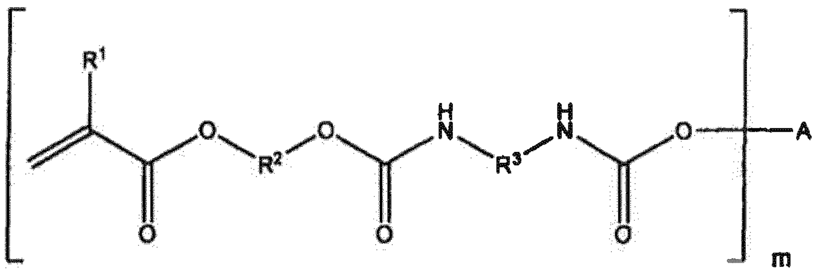

[I]

worin $R^1$ steht für ein Wasserstoffatom oder eine Methylgruppe, $R^2$ und $R^3$ stehen jeweils unabhängig voneinander für eine C1-C10-lineare oder -verzweigte Alkylgruppe, eine C3-C8-Cycloalkylgruppe, gegebenenfalls substituiert mit einer C1-C6-Alkylgruppe, oder einer Kombination der Gruppen davon, A steht für eine Polymerkette erhalten durch Polymerisierung von Butadien oder eine Polymerkette erhalten durch Hydrierung der Polymerkette davon, und m steht für 1 oder 2,
(B) ein (Meth)acrylsäureester-Monomer und
(C) ein Foto-Radikalpolymerisierungs-Initiator wiedergegeben durch Formel [IV]:

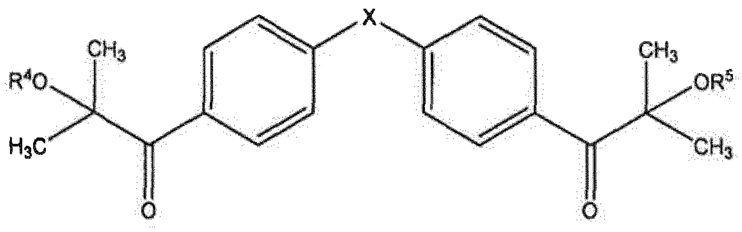

[IV]

worin X für ein Beliebiges steht ausgewählt aus der Gruppe bestehend aus O, $CH_2$, $CH(CH_3)$, und $C(CH_3)_2$, und $R^4$ und $R^5$ stehen jeweils unabhängig voneinander für ein Wasserstoffatom, eine Methylgruppe oder eine Trimethylsilylgruppe.

2. Fotohärtbare Zusammensetzung nach Anspruch 1, worin der Foto-Radikalpolymerisierungs-Initiator wiedergegeben durch Formel [IV] 2-Hydroxy-1-(4-(4-(2-hydroxy-2-methyl-propionyl)-benzyl)-phenyl)-2-methyl-propan-1-on ist.

3. Fotohärtbare Zusammensetzung nach Anspruch 1 und 2 umfassend:

(C) 3 to 7 Gewichtsteile des Foto-Radikalpolymerisierungs-Initiators, bezogen auf 100 Gewichtsteile
(A) des terminal-modifizierten (hydrierten) Polybutadiens wiedergegeben durch Formel [I] und

(B) des (Meth)acrylsäureester-Monomers.

**4.** Fotohärtbare Zusammensetzung nach irgendeinem der Ansprüche 1 bis 3, worin das terminal-modifizierte gegebenenfalls hydrierte Polybutadien wiedergegeben durch Formel [I] erhalten wird durch Umsetzung eines Isocyanats wiedergegeben durch Formel [II]:

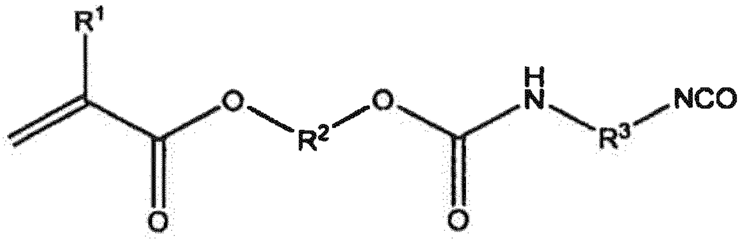

[II]

worin $R^1$, $R^2$ und $R^3$ die gleiche Bedeutung wie oben angegeben haben, mit einem Hydroxylgruppen-terminierten Polybutadien oder hydrierten Polybutadien wiedergegeben durch Formel [III]:

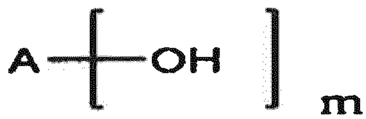

[III]

worin A und m die gleiche Bedeutung wie oben angegeben haben.

**5.** Gehärtetes Produkt erhalten durch Photohärten der Zusammensetzung nach irgendeinem der Ansprüche 1 bis 4.

## Revendications

**1.** Composition photodurcissable comprenant :

(A) un polybutadiène à terminaison modifiée et éventuellement hydrogéné représenté par la formule [I] :

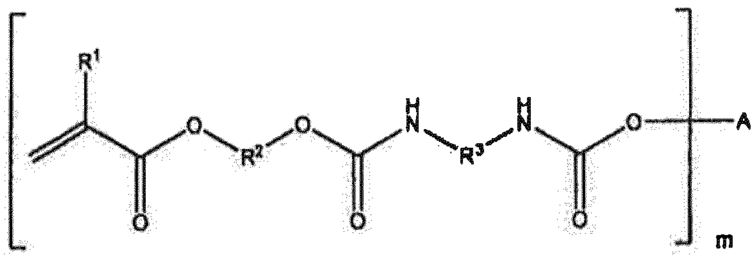

[I]

dans laquelle $R^1$ représente un atome d'hydrogène ou un groupe méthyle, $R^2$ et $R^3$ représentent chacun indépendamment un groupe alkylène linéaire ou ramifié en C1-C10, un groupe cycloalkylène en C3-C8 éventuellement substitué par un groupe alkyle en C1-C6, ou une combinaison de leurs groupes, A représente une chaîne polymère obtenue par polymérisation de butadiène ou une chaîne polymère obtenue par hydrogénation de sa chaîne polymère, et m représente 1 ou 2,
(B) un monomère ester d'acide (méth)acrylique, et
(C) un initiateur de polymérisation photo-radicalaire représenté par la formule [IV] :

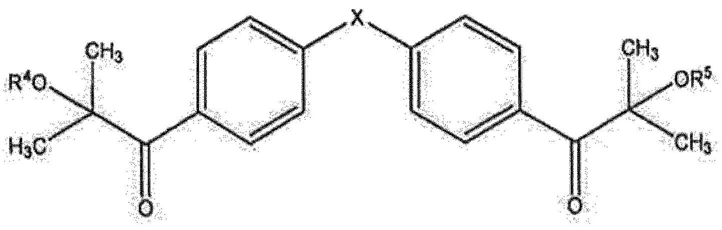

[IV]

dans laquelle X représente un élément quelconque choisi dans le groupe constitué par O, $CH_2$, $CH(CH_3)$ et $C(CH_3)_2$, et $R^4$ et $R^5$ représentent chacun indépendamment un atome d'hydrogène, un groupe méthyle ou un groupe triméthylsilyle.

**2.** Composition photodurcissable selon la revendication 1, dans laquelle l'initiateur de polymérisation photo-radicalaire représenté par la formule [IV] est la 2-hydroxy-1-(4-(4-(2-hydroxy-2-méthyl-propionyl)benzyl)-phényl)-2-méthyl-propan-1-one.

**3.** Composition photodurcissable selon la revendication 1 ou 2, comprenant :

(C) 3 à 7 parties en poids de l'initiateur de polymérisation photo-radicalaire, par rapport à 100 parties en poids au total de
(A) le polybutadiène à terminaison modifiée (hydrogéné) représenté par la formule [I], et
(B) le monomère ester d'acide (méth)acrylique.

**4.** Composition photodurcissable selon l'une quelconque des revendications 1 à 3, dans laquelle le polybutadiène à terminaison modifiée et éventuellement hydrogéné représenté par la formule [I] est obtenu par réaction d'un isocyanate représenté par la formule [II] :

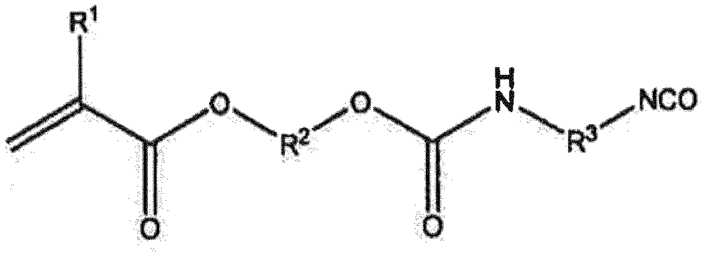

[II]

dans laquelle $R^1$, $R^2$ et $R^3$ ont la même signification que ci-dessus, avec un polybutadiène terminé par un groupe hydroxyle ou un polybutadiène hydrogéné représenté par la formule [III] :

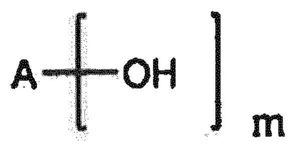

[III]

dans laquelle A et m ont la même signification que ci-dessus.

**5.** Produit durci obtenu par photodurcissement de la composition photodurcissable selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007039587 A
- JP S60195538 B
- JP 2011116965 A